# EUROPEAN PATENT APPLICATION

(11) **EP 1 895 444 A1**
(43) Date of publication of application: **05.03.2008**
(21) Application number: 07016853.9
(22) Date of filing: 28.08.2007
(51) Int. Cl.: G06F 21/20

(54) **Vehicle information rewriting system**

(30) Priority: 01.09.2006 JP 2006237754
(71) Applicant: Denso Corporation, Kariya-city, Aichi-pref. 448-8661 (JP)
(72) Inventor: Kishida, Masayuki c/o Denso Corporation Intellectual Property Dept., Kariya-city Aichi-pref., 448-8661 (JP); Kato, Aya c/o Denso Corporation Intellectual Property Dept., Kariya-city Aichi-pref., 448-8661 (JP); Mori, Yuuji c/o Denso Corporation Intellectual Property Dept., Kariya-city Aichi-pref., 448-8661 (JP); Natsume, Mitsuyoshi c/o Denso Corporation Intellectual Property Dept., Kariya-city Aichi-pref., 448-8661 (JP)
(74) Representative: Kuhnen & Wacker

(57) **Abstract**

A rewriting system for rewriting a content of a nonvolatile memory including vehicle information and the like provides a supplemental authentication process that detects a wireless authentication medium (200) associated to an authorized rewriting tool user by wireless polling on an unconditional basis besides authenticating the authorized rewriting tool user based on an input from a rewriting tool (10) for the purpose of an improved security.

## Description

The present disclosure relates to a vehicle information rewriting system.

A motor vehicle (hereinafter referred to as a "vehicle") has an ECU mounted thereon for controlling various devices (elements to be controlled). The ECU has a main control unit including a CPU and controls electronic devices mounted on the vehicle through execution of a predetermined software program. The software program is stored in a nonvolatile memory (for example, a flash memory) so that it may be updated as required for upgrading or debugging (see Japanese patent documents JP-A-2003-337748, JP-A-2003-172199 and JP-A-2001-229014. JP-A-2003-337748 is also published as US patent document 2003/0221049). To have an on-board application updated, the owner of the vehicle, in many cases, brings the vehicle to a vehicle dealer or the like. At the vehicle dealer, a special rewriting tool for the ECU including the software program to be rewritten is connected by communication to the ECU, and an operator rewrites the software program using the rewriting tool.

As to authentication performed to make sure that a rewriting tool is used by a authorized user only, however, there have been aspects not necessarily supported by adequate consideration. To prevent unauthorized use of a rewriting tool, for example, by a thief, impersonator, or substitute, an authentication system more powerful than known password-dependent systems is required.

In view of the above and other problems, it is an object of the present invention to provide a vehicle information rewriting system which enables more powerful authentication than before in rewriting vehicle information such as a software program stored in a nonvolatile memory.

The present invention provides a vehicle information rewriting system which removably connects a rewriting tool functioning, via a communication unit, as a data transmission source, to a vehicle control unit having a main control unit including a CPU and controlling an electronic device mounted on a vehicle by having a predetermined software program executed by the main control unit, and which rewrites, based on rewriting data transmitted from the rewriting tool via the communication unit, data stored in a vehicle information storage provided in the vehicle control unit as a nonvolatile memory and storing vehicle information including the software program. To achieve the above object, the rewriting tool included in the vehicle information rewriting system comprises: an operation mode switching unit which makes switching between a rewriting permitted mode in which rewriting of data stored in the vehicle information storage is permitted and a rewriting restricted mode in which rewriting of data stored in the vehicle information storage is restricted relative to the rewriting permitted mode; a wireless polling unit which, when the rewriting tool is used for rewriting operation, wirelessly polls a wireless authentication medium for detecting the wireless authentication medium mandatorily in possession of an authorized user of the rewriting tool; and a mode switch ordering unit which orders the operation mode switching unit to switch to the rewriting permitted mode on condition of a successful detection, through the wireless polling, of the wireless authentication medium.

According to the present invention, irrespective of the authentication made based on information inputted from the rewriting tool, a wireless authentication medium required to be accompanying a authorized user of the rewriting tool (for example, carried by the authorized user or kept by a medium holding device fixedly provided at the location where the rewriting tool is used) is detected by wireless polling from the rewriting tool for enhanced authentication of the authorized user.

Other objects, features and advantages of the present invention will become more apparent from the following detailed description made with reference to the accompanying drawings, in which:
FIG. 1 shows a block diagram of an ECU used in a vehicle information rewriting system in an embodiment of the present disclosure;
FIG. 2 shows a block diagram of a rewriting tool in the embodiment of the present disclosure;
FIG. 3 shows a flowchart of a registration process of a portable key in the embodiment of the present disclosure;
FIG. 4 shows a flowchart of a main process of the vehicle information rewriting system in the embodiment of the present disclosure;
FIG. 5 shows a state transition diagram of a portable unit detection process in the embodiment of the present disclosure;
FIG. 6A shows a flowchart of a process in a rewriting restricted mode in the embodiment of the present disclosure;
FIG. 6B shows a flowchart of a process in a rewriting permitted mode in the embodiment of the present disclosure;
FIG. 7 shows a block diagram of hardware configuration in a first example of a supplemental authentication process in the embodiment of the present disclosure;
FIG. 8 shows a flowchart of an encryption key generation process in the first example of the supplemental authentication process;
FIG. 9 shows a flowchart of an authentication process that uses the first example of the supplemental authentication process;
FIG. 10 shows a block diagram of hardware configuration in a second example of the supplemental authentication process in the embodiment of the present disclosure;
FIG. 11 shows a flowchart of a biometric information registration process in the second example of the supplemental authentication process;
FIG. 12 shows a flowchart of the authentication process that uses the second example of the supplemental authentication process;
FIG. 13 shows a block diagram of hardware configuration in a third example of the supplemental authentication process in the embodiment of the present disclosure; and
FIG. 14 shows a flowchart of the authentication process that uses the third example of the supplemental authentication process.

Embodiments of the present invention will be described with reference to drawings.

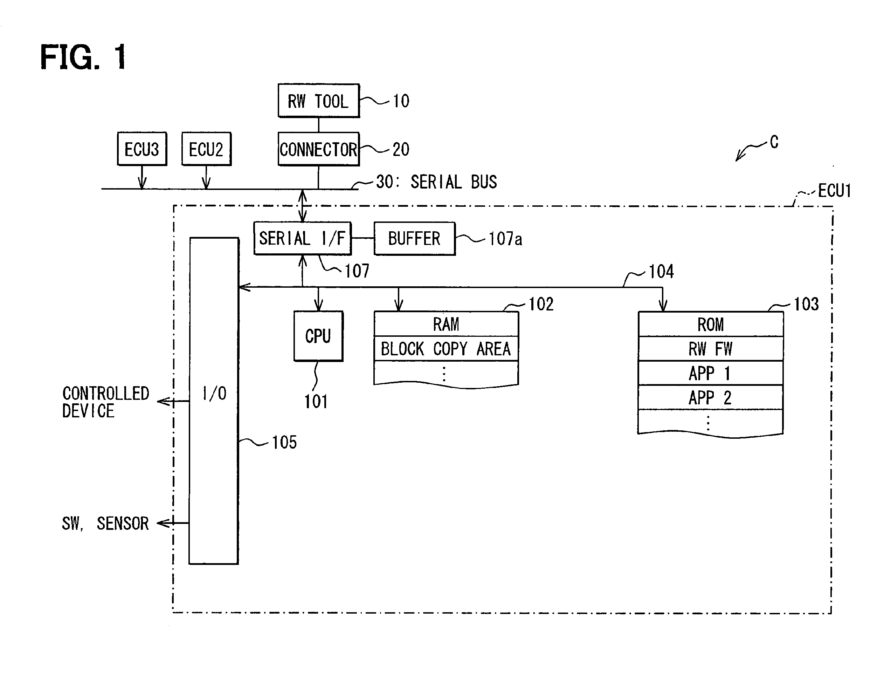

FIG. 1 is a block diagram showing an electrical configuration of an electronic control unit (ECU) to which the vehicle information rewriting system according to the present invention is applied. An ECU 1 has a main control unit including a CPU 101. The ECU 1 performs processing to control electronic devices (control object devices: controlled device) provided on a vehicle C by having a predetermined software program executed by the main control unit. To be concrete, the ECU 1 is a microcomputer in which the CPU 101, a ROM 103 (a nonvolatile memory such as a flash memory), a RAM 102, and an input/output unit (I/O port) 105 are connected via a bus 104.

The ROM 103 stores applications 1, 2, and so on which, controlling the object devices, realize various on-board functions. The ROM 103 being composed of a nonvolatile memory is electrically rewritable, so that the applications 1, 2, and so on can be added to, deleted, or rewritten for upgrading as required. A rewriting firmware (FW) which directly controls on-board rewriting is also included in the ROM 103. The applications 1, 2, and so on are included in the subject vehicle information to be rewritten. The subject vehicle information to be rewritten may also include various parameter values handled by the applications 1, 2, and so on and other concomitant information.

In the present embodiment, the ROM 103 is a flash memory. The flash memory, due to its operating principle intrinsic to the hardware, allows information to be additionally written on it in bits whereas allowing information existing on it to be erased only in blocks (this has been well-known, so that no details will follow as to the reason why). To write data in an area of the flash memory, overwriting (though not in a real sense) the data already existing there, it is necessary to erase the area in blocks and then write new data. To rewrite data in a specific area on the flash memory, the target data to be rewritten is once copied to a block copy area on the RAM 102, the specific area on the flash memory is erased in blocks, the target data copied to the RAM 102 is rewritten there, and then, the rewritten data is written back in blocks to the erased specific area on the flash memory. The rewriting firmware controls this kind of rewriting process.

On the vehicle C, plural ECUs like the above-described one are connected via a serial communication bus 30 configuring an on-board network (communication protocol, for example, Controller Area Network (CAN)), the plural ECUs each being connected to the serial communication bus 30 via a serial interface 107 and a reception buffer 107a. A connector 20 for connecting an external device is also connected to the serial communication bus 30. A rewriting tool 10 to be used by an operator (for example, at a vehicle dealer) to rewrite the vehicle information stored in each of the ECUs is connected to the connector 20. The rewriting tool 10 carries out, through execution of the firmware stored in itself and in cooperation with a target ECU, a series of rewriting processes which include authentication (including authentication input) required to rewrite the vehicle information in the target ECU, transfer of overwriting data via the serial communication bus 30, and reception of status information relevant to the rewriting processes from the target ECU.

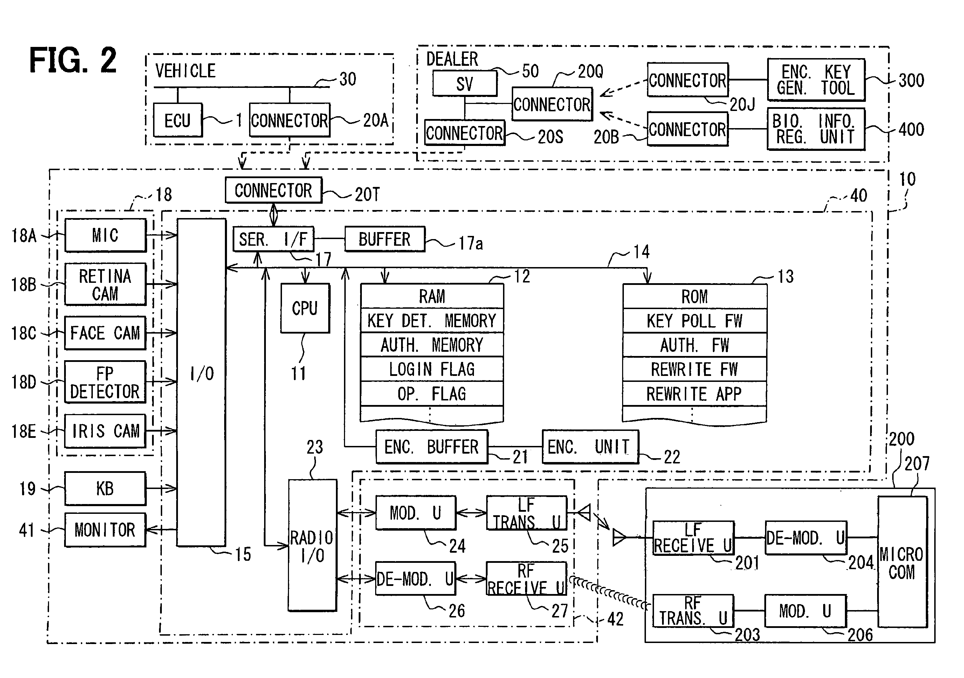

FIG. 2 is a block diagram showing an electrical configuration of the rewriting tool 10. The rewriting tool 10 includes a microcomputer 40 in which a CPU 11, a RAM 12, a ROM 13 (a nonvolatile memory such as a flash memory), an I/O port 15, and a radio I/O port 23 are connected via the bus 14. An operation input unit 19 including a keyboard (hereinafter also referred to as the "keyboard 19") (in the following, technical elements which are conceptually in an inclusion relation may be allocated a same reference numeral) and a monitor 41 including a liquid crystal panel are connected to the I/O port 15. To rewrite the vehicle information, an operator inputs required information following instructions displayed on the monitor 41. The rewriting firmware that executes, in cooperation with an on-board rewriting firmware and through communications made via connectors 20T and 20A, processes for rewriting the vehicle information based on the information inputted by the operator is stored in the ROM 13. The ROM 13 also stores overwriting vehicle information, that is, in the present embodiment, data strings making up an application program (hereinafter also referred to as application data). Every time it becomes necessary to update a particular on-board application, required application data is prepared, downloaded, for example, from a predetermined server by communication, and stored in the ROM 13.

A wireless communication unit 42 is connected to a radio I/O port 23. The wireless communication unit 42 includes: a low-frequency (LF) transmission/reception unit 25 which wirelessly communicates with a portable key 200 in a LF band via a coiled LF antenna; and a modulation unit 24, which is included in the LF transmission/reception unit 25, connected to the radio I/O port 23. The wireless communication unit 42 further includes: a radio frequency (RF) receive unit 27 which wirelessly communicates with the portable key 200 via a built-in antenna, not shown, in an RF band; and a de-modulation 26 which is connected to the radio I/O port 23 and to which the RF receive unit 27 is connected.

The portable key 200 (portable device) is for use with a smart key system, not shown, installed in the vehicle C. The portable key 200 has a unique vehicle ID code recorded in it and wirelessly communicates with devices aboard the vehicle C. Based on the ID code, the devices aboard the vehicle C check to determine whether or not the portable device 200 is present within a predetermined distance from the vehicle C, and, depending on the check result, control a predetermined operation (e.g. door locking/unlocking or immobilizer unlocking). The wireless communication unit at the vehicle side to communicate with the portable key 200 has a configuration similar to that of the wireless communication unit 42 of the rewriting tool 10 shown in FIG. 2.

Describing the wireless communication unit at the vehicle side, making reference to reference numerals indicated in FIG. 2 as required, a LF carrier signal is modulated in a modulation unit 24 by a baseband signal in which a portable key ID and the like are reflected. The modulated signal is periodically and repeatedly transmitted as a polling signal from the LF transmission/reception unit 25. When the portable key 200 exists in a range reached by the polling signal, the portable key 200 receives the polling signal at a LF receive unit 201, extracts the baseband signal at a demodulation unit 204, and analyzes the baseband signal at a microcomputer 207. When the analysis confirms that the polling signal is targeted at the portable key 200, the portable key 200 has the RF carrier signal modulated, at a modulation unit 206, by the baseband signal in which the authentication ID is reflected, and transmits an answer signal from a RF transmission unit 203 to the vehicle. On the vehicle, the answer signal is received at a RF receive unit 27, the baseband signal containing the authentication ID is extracted and processed for authentication at a demodulation unit 26, and, only when the authentication is passed, function control is carried out, for example, for door unlocking or immobilizer unlocking.

In the present embodiment, the portable key 200 serves also as a wireless authentication medium accompanying (for example, carried by) a qualified user (for example, an engineer assigned at a vehicle dealer) of the rewriting tool 10. The portable key 200 is, principally, to be possessed, not by a qualified user of the rewriting tool 10, but by the owner of the vehicle. Hence, it stores the ID for owner authentication. When the owner brings the vehicle to a vehicle dealer to have vehicle information rewritten, the owner lends the portable key 200 to a qualified user of the rewriting tool 10. The qualified user registers the portable key 200 with the rewriting tool 10 (for example, the ROM 13) using the authentication ID and then uses the rewriting tool 10. The portable key 200 may be one for use with a smart key system for a particular vehicle (for example, a particular vehicle owned by the vehicle dealer) different from the target vehicle for rewriting vehicle information.

Referring to FIG. 2, when rewriting vehicle information using the rewriting tool 10, the wireless communication unit 42 of the rewriting tool 10 is used as a wireless polling unit for wirelessly polling the portable key 200 to detect the portable key 200 (wireless authentication medium) accompanying a qualified user of the rewriting tool 10. The wireless polling is controlled by a portable-key polling firmware stored in the ROM 13.

The connector 20T is connected, via a serial interface 17 and a reception buffer 17a, to an internal bus 14 included in the microcomputer 40 of the rewriting tool 10. The rewriting tool 10 is removably connected, at the connector 20T, to the connector 20A connected to the serial communication bus 30 at the vehicle side, thereby being enabled to communicate with the target ECU for vehicle information rewriting. The rewriting firmware installed in the rewriting tool 10 plays a role of realizing, in a software way, the function of an operation mode switching unit and the function of a mode switch ordering unit. The operation mode switching unit switches the operation mode between a rewriting permitted mode in which rewriting contents (for example either of the applications 1 and 2) of the ROM 103 (vehicle information storing unit) of the ECU 1, that is the target of rewriting, shown in FIG. 1 is permitted and a rewriting restricted mode in which rewriting is restricted relative to the rewriting permitted mode. The mode switch ordering unit orders the operation mode switching unit to switch to the rewriting permitted mode on condition of a successful detection by wireless polling of a wireless authentication medium.

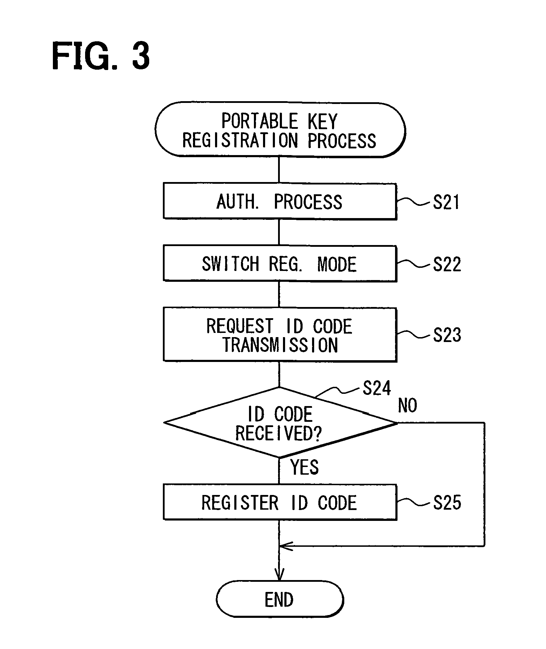

In the following, by way of example, a process of rewriting an application stored in the ECU 1 (shown in FIG. 1) using the rewriting tool 10 will be described in detail with reference to flowcharts. FIG. 3 is a flowchart for registering the portable key 200 with the rewriting tool 10. First, to authenticate a qualified user of the rewriting tool 10, an authentication ID (for example, an employee number) or authentication information, for example, a password, to be registered is inputted from the keyboard 19 serving as an input unit of the rewriting tool 10 (Step S21: authentication process). The rewriting tool 10 performs a well-known authentication process, for example, checking the inputted authentication information to be registered against master information pre-stored, for example, in the ROM 13. Only when the authentication is passed, the processing advances to Step S22 where switching to the registration mode is made. The authentication process thus performed may be identical with a supplemental authentication process being described later. In a case where the portable key for the target vehicle to have an on-board program rewritten is already registered in the rewriting tool 10, it is determined that the portable key need not be registered again and the subsequent steps are skipped. In the present embodiment, the registration process is performed with the rewriting tool 10 and the vehicle wire-connected using a predetermined connector.

When the registration mode is entered, the rewriting tool 10 requests the wire-connected vehicle to transmit the same authentication ID (ID code) as the one registered in the portable key 200 (Step S23). When the vehicle recognizes the request for the authentication ID, it transmits the authentication ID to the rewriting tool 10. When the authentication ID thus transmitted is received (Step S24), the rewriting tool 10 registers it in the ROM 13 (Step S25).

An arrangement may be made such that the authentication ID is wirelessly transmitted directly from the portable key 200 to the rewriting tool 10.

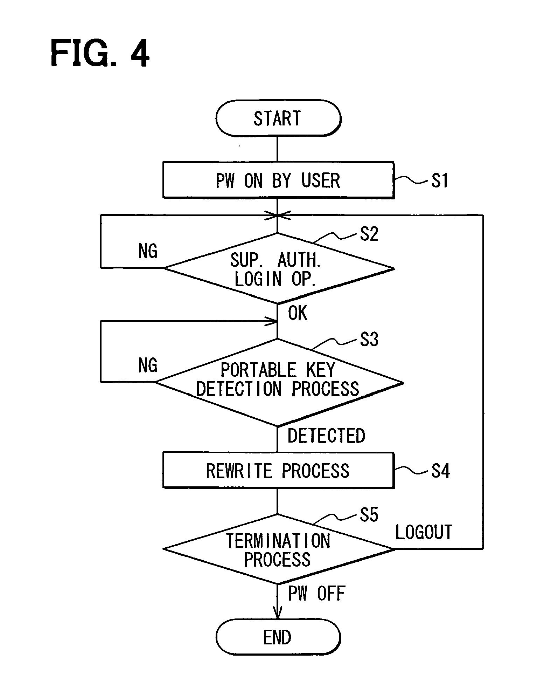

FIG. 4 is a flowchart of main processing performed, to rewrite an application program, using a portable-key polling firmware and a rewriting firmware in the rewriting tool 10. With the rewriting tool 10 connected to the vehicle via the connectors 20T and 20A as shown in FIG. 2, the rewriting tool 10 is powered on in Step S1 shown in FIG. 4, causing a log-in screen to appear on the monitor 41. At the same time, a log-in flag and an operation permission flag provided, as shown in FIG. 2, in the ROM 12 of the rewriting tool 10 are initialized (that is, a state is entered in which neither logging in nor tool operation (associated with program rewriting) is permitted). In Step S2, a supplemental authentication process is performed in accordance with instructions shown on the log-in screen. When the supplementary authentication is passed, logging in the system is permitted (only the log-in flag is set to a permitted state) and the processing advances to Step S3. When the supplementary authentication is not passed, logging in the system is not permitted and the processing returns to Step S2 where the supplementary authentication is performed again. The supplementary authentication process will be described in more detail later.

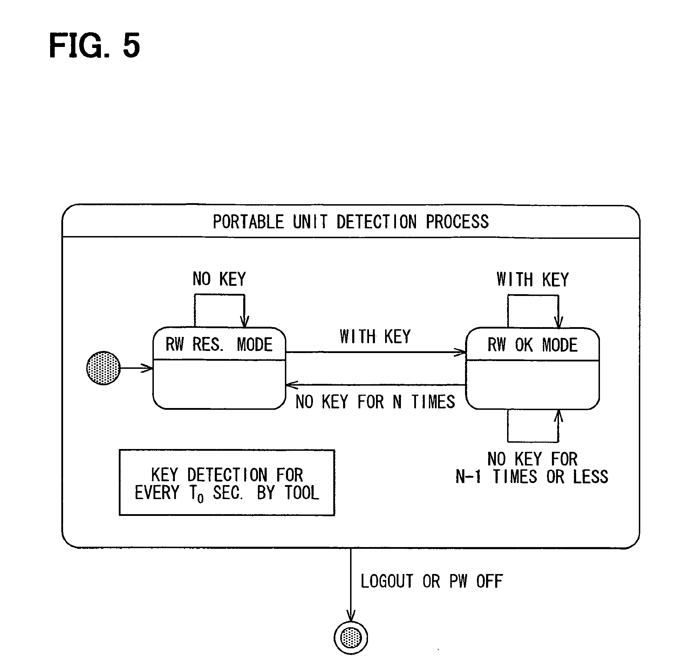

In Step S3, wireless polling of the portable key 200 (wireless authentication medium) is periodically repeated. In connection with the processing to be performed by the rewriting firmware (the rewriting tool 10 (see FIG. 2) and the ECU 1 (see FIG. 1)) to rewrite a particular application (or particular vehicle information) stored in the ROM 103, switching is made (in Step S4) as required between a rewriting permitted mode and a rewriting restricted mode according to the result of the wireless polling. In the rewriting permitted mode, the overwriting application program data (or the overwriting vehicle information) can be transmitted from the rewriting tool 10 to the ECU 1. In the rewriting restricted mode, such data transmission is prohibited (that is, rewriting is restricted (prohibited) without the required overwriting data transmitted to the ECU 1). This process will be described in more detail below with reference to FIG. 5.

Switching between the rewriting permitted mode (RW OK MODE in FIG. 5) and the rewriting restricted mode (RW RES. MODE in FIG. 5) is performed as a state transition process. Namely, in the rewriting permitted mode, switching to the rewriting restricted mode takes place when, while wireless polling of the portable key 200 (wireless authentication medium) is periodically repeated, a polling result indicating a failure in detecting the portable key 200 is obtained. Conversely, in the rewriting restricted mode, switching to the rewriting permitted mode takes place when a polling result indicating a successful detection of the portable key 200 is obtained. (When switching is made to the rewriting restricted mode, the operation permission flag is set to a rewriting prohibited state. When switching is made to the rewriting permitted mode, the operation permission flag is set to a rewriting permitted state.)

According to the present embodiment, when, in the rewriting restricted mode, a polling result indicating a successful detection of the portable key 200 is obtained, switching is made from the rewriting restricted mode to the rewriting permitted mode immediately. Also, when, in the rewriting permitted mode, a polling result indicating a failure in detecting the portable key 200 is obtained plural times (indicated as "N" times in FIG. 5: "N" may be a value, for example, between 2 and 5) in succession, switching is made from the rewriting permitted mode to the rewriting restricted mode. The interval T₀ of polling may be constant, or it may be set to vary with time (for example, to increase with time).

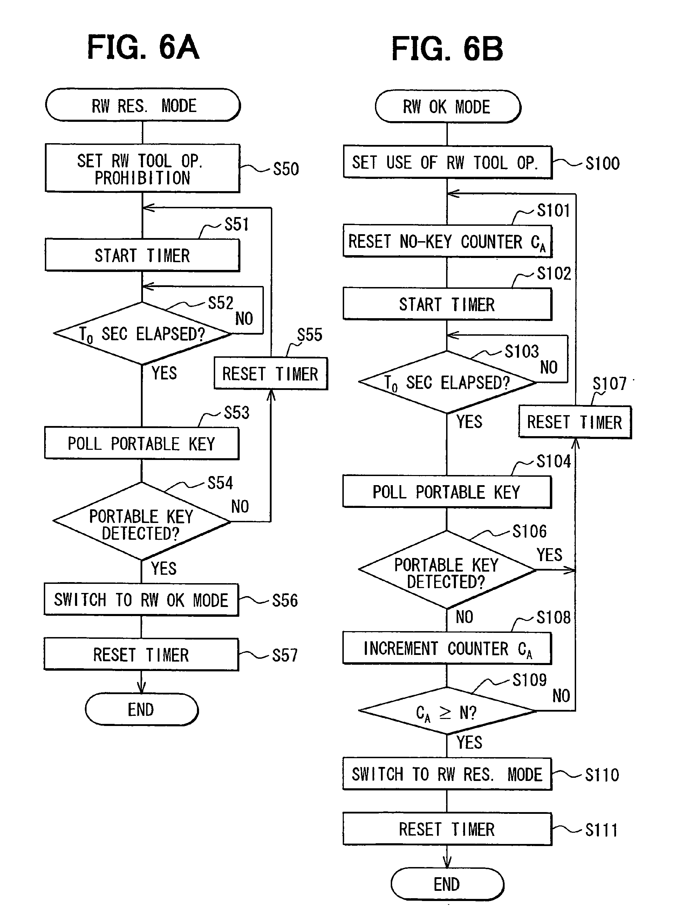

FIG. 6A is a flowchart of processing performed, in the rewriting restricted mode, by the rewriting firmware (included in the rewriting tool 10). First, in Step S50, the rewriting tool 10 is disabled (transmission of data required for rewriting is prohibited). Next, a software timer to measure the polling interval T₀ is started (Step S51). When the interval T₀ elapses, polling of the portable key 200 is started (in Steps S52 and S53).

The wireless polling is carried out by executing the portable-key polling firmware. The basic contents of wireless polling performed by the rewriting tool 10 are substantially the same as the contents of wireless polling performed in the smart key system on the vehicle. Referring to FIG. 2, the LF carrier signal is modulated in the modulation unit 24 by a baseband signal in which a portable key ID is reflected. The modulated signal is periodically and repeatedly transmitted as a polling signal from the LF transmission/reception unit 25. The portable key 200 when present at a location reachable by the polling signal receives the polling signal at the LF receive unit 201, extracts the baseband signal at the demodulation unit 204, and analyzes the baseband signal at the microcomputer 207. When the analysis confirms that the polling signal is targeted at the portable key 200, the portable key 200 has the RF carrier signal modulated, at the modulation unit 206, by the baseband signal in which the authentication ID is reflected, and transmits an answer signal from the RF transmission unit 203 to the rewriting tool 10. In the rewriting tool 10, the answer signal is received at the RF receive unit 27, the baseband signal containing the authentication ID is extracted and processed for authentication at the dede-modulation unit 26. When the ID is authenticated, the portable key is determined to be present. When the ID is not authenticated, the portable key is determined not to be present.

Referring to FIG. 6A again, when, as a result of the polling, the portable key is determined not to be present in Step S54, the timer is cleared in Step S55, and the processing returns to Step S51 to repeat the subsequent steps. When, as a result of the polling, the portable key is determined to be present in Step S54, switching to the rewriting permitted mode is made in Step S56, and the timer is cleared in Step S57 to terminate the processing.

FIG. 6B is a flowchart of processing performed, in the rewriting permitted mode, by the rewriting firmware (included in the rewriting tool 10). First, in Step S100, the rewriting tool 10 is enabled (transmission of data required for rewriting is permitted). Subsequently, an no-key counter C_{A} to count the number of successive polling results each indicating a portable key absence is cleared in Step S101, and a software timer to measure the polling interval T₀ is started in Step S102. When the interval T₀ is determined to have elapsed in Step S103, polling of the portable key 200 is started in Step S104. When, in Step S106, the portable key is determined to be present as a result of the polling made in Step S104, the processing advances to Step S108 where the no-key counter C_{A} is incremented. The processing then advances to Step S109 where whether the count of the no-key counter C_{A} has reached N is checked. When, in Step S109, the count is determined not to have reached N, the timer is cleared in Step S107 and the processing returns to Step S101 to repeat the subsequent steps. When, in Step S109, the count is determined to have reached N, the processing advances to Step S110 where switching to the rewriting restricted mode is made, and the timer is cleared in Step S111 to terminate the processing.

Referring to FIG. 4, in a state where the rewriting permitted mode has been set, data required in rewriting an application program (or other vehicle information) is transmitted from the rewriting tool 10 to the vehicle, and the target information in the ROM 13 is rewritten (Step S4). When the rewriting is finished, the processing advances to Step S5. In Step S5, the processing is terminated when the rewriting tool 10 is powered off. When the rewriting tool 10 is not powered off, the user is logged out and the processing returns to Step S2 to wait for another log-in operation to be started.

The rewriting restricted mode may be effected by any appropriate means. It is only required that, in the rewriting restricted mode, rewriting an on-board application program is practically prohibited (restricted) regardless of the intention of the user of the rewriting tool 10. To practically prohibit rewriting, an arrangement may be made, for example, such that operation initiated by the rewriting tool 10 is rejected on the vehicle side or such that, even though operation initiated by the rewriting tool 10 is not rejected, data communications for rewriting an on-board application program are prohibited between the vehicle and the rewriting tool 10. In the case of the former, it is possible that, after the rewriting tool 10 starts transmitting data required to rewrite an on-board application program to the vehicle, the required portable key is determined to be absent and, as a result, operation initiated by the rewriting tool starts being rejected. In such a case, it is possible that program data transmission started by operation accepted before the portable key was determined to be absent is continued. Even when the program data transmission is continued, however, no program data transmission is performed for any subsequently rejected operation of the rewriting tool 10, so that rewriting an application program is in effect restricted (or prohibited).

The supplementary authentication process will be described in detail below. According to the present embodiment, the rewriting tool 10 performs, in advance of the authentication by polling of the portable key 200 (wireless authentication medium) (hereinafter referred to as the "portable key authentication by polling") descried above, a user qualification authentication process (Step S2 shown in FIG. 4). The rewriting tool 10 is provided with the keyboard 19 and a biometric data input unit 18 as supplementary authentication information input units for inputting information required for the supplementary authentication. The supplementary authentication information input units may be used selectively depending on the authentication system employed. (Therefore, of the authentication information input units shown in FIG. 2, those not required in using the authentication system employed may be omitted.) The supplementary authentication process is performed by an authentication firmware stored in the ROM 13 shown in FIG. 2.

As is obvious from the flowchart shown in FIG. 4, switching to the rewriting permitted mode is possible only after both the supplementary authentication and the portable key authentication by polling are passed (only after Steps S2 and S3 are passed).

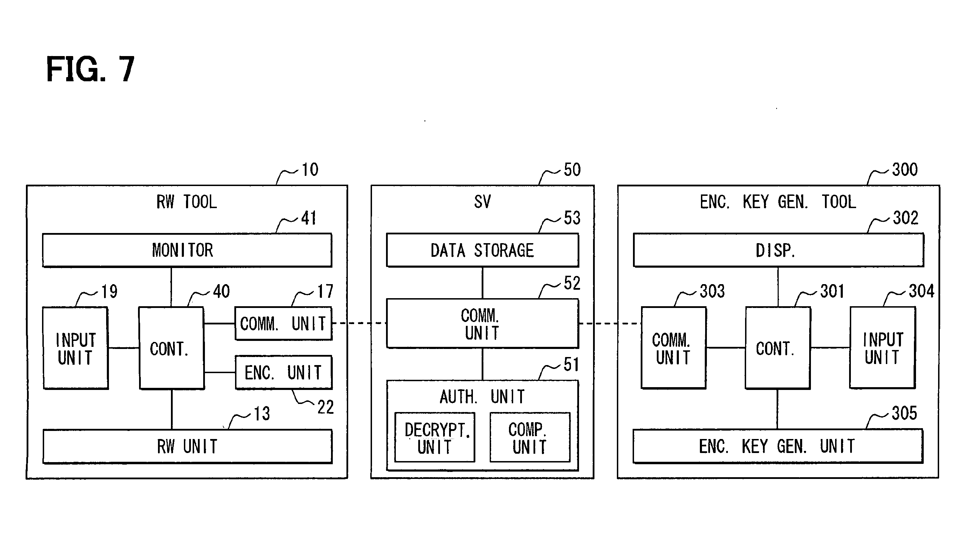

A first example of the supplementary authentication process will be described below. In this example, the supplementary authentication process is performed using a public key cryptosystem. As shown in FIG. 7, the rewriting tool 10 is connectable to an authentication server 50. The authentication server 50 includes general computer hardware. As shown in FIG. 2, the authentication server 50 is connected, via a connector 20S, to the connector 20T of the rewriting tool 10 by serial communication. The authentication server 50 is, as shown in FIG. 7, provided with a communication unit 52 (having a serial interface connected to the connector 20T and including an supplementary authentication information receiving unit which receives supplementary authentication information and an authentication result transmitting unit which transmits the result of supplementary authentication to the rewriting tool), an authentication unit 51 (having a microcomputer mostly made up of hardware and including an supplementary authentication execution unit which carries out a supplemental authentication process based on the received supplementary authentication information), and a data storage 53 (having a nonvolatile memory connected via an internal bus to the microcomputer).

As also shown in FIG. 7, an encryption key generation tool 300 is provided to be connectable to the authentication server 50. The encryption key generation tool 300 issues a private key which is an encryption key and a public key which is a decryption key paired with the encryption key to a qualified user of the rewriting tool 10, the pair of the private key and public key being unique to the qualified user. As shown in FIG. 2, the authentication server 50 having a connector 20Q and the encryption key generation tool 300 having a connector 20J are connected to be serially communicable via the two connectors. The encryption key generation tool 300 is provided with a control main unit 301 including microcomputer hardware, a communication unit 303 (including a serial interface connected to the connector 20J), an input unit 304 including, for example, a keyboard, a display unit 302 including, for example, a liquid crystal display, and an encryption key generation unit 305 (whose function is realized, through execution of an encryption key generation firmware, by the control main unit 301 in a software way).

The encryption key generation unit 305 functions as an encryption key and decryption key generating unit which generates a pair of an encryption key associated with a basic checking code and a decryption key corresponding to the encryption key. The display unit 302 functions as an encryption key disdosure/output unit which discloses/outputs the generated encryption key to only a qualified user of the rewriting tool. The communication unit 303 functions as a decryption key transmission unit which transmits the generated decryption key associated with the basic checking code (being described later) to the authentication server 50. The communication unit 52 of the authentication server 50 functions as an acquisition unit which acquires the decryption key from the encryption key generation tool 300 and also as a receiving unit which receives the decryption key and the basic checking code transmitted from the rewriting tool 10. The data storage 53 functions as a storage unit which stores, as an associated pair of data, the received decryption key and basic checking code.

In the supplementary authentication process performed using a private key and a public key, the input unit 19 of the rewriting tool 10 functions as a basic checking code input unit, i.e. an supplementary authentication information input unit for inputting a basic checking code (in the present embodiment, the employee number of a qualified user of the rewriting tool 11) as supplementary authentication information, and also functions as an encryption key acquisition unit which acquires an encryption key for encrypting a basic checking code. An encryption unit 22 also included in the rewriting tool 10 functions as a checking code encryption unit which generates an encrypted checking code by encrypting the basic checking code inputted using the acquired encryption key. The basic checking code may be encrypted using a well-known encryption logic such as the RSA method or an elliptic curve cryptosystem. In the present embodiment, taking into consideration that an encryption process generates a large processing load depending on the encryption system used, an encryption logic 22 which is a logic circuit for encrypting the basic checking code is provided, along with an encryption buffer 21, in an internal bus of the rewriting tool 10 as shown in FIG. 2. The encryption logic 22 constitutes the encryption unit 22.

Referring to FIG. 7 again, in the rewriting tool 10, a control main unit 40 is composed of the microcomputer 40 shown in FIG. 2. The control main unit 40 is connected with the display unit (monitor) 41, the input unit (keyboard) 19, the encryption unit (encryption logic) 22, and the communication unit (serial interface) 17. A program rewriting unit 13 functions through execution of the rewriting firmware by the control main unit 40. The communication unit 17 includes an encrypted checking code transmitting unit which transmits an encrypted checking code to the authentication server and a decryption key acquisition unit which acquires a decryption key paired with an encryption key. The authentication unit 51 of the authentication server 50 includes a checking code decryption unit which decrypts, using the decryption key, the encrypted checking code received from the rewriting tool 10. The authentication unit 51 also performs a supplemental authentication process based on the decrypted checking code.

In the rewriting tool 10, the communication unit 17, when transmitting an encrypted checking code (using the encrypted checking code transmitting unit), also transmits the unencrypted original basic checking code to the authentication server. In the authentication server 50, the authentication unit (supplementary authentication unit) 51 performs a supplemental authentication process based on both the checking code decrypted from the encrypted checking code and the unencrypted original basic checking code received together with the encrypted checking code. To be concrete, the authentication unit 51 reads the decryption key corresponding to the received basic checking code from the data storage 53 (storage unit), decrypts, using the decryption key thus read out, the received encrypted checking code, and determines, as a supplemental authentication process, whether or not the decrypted information matches the basic checking code.

How the above first example of the supplementary authentication process proceeds will be described below with reference to flowcharts.

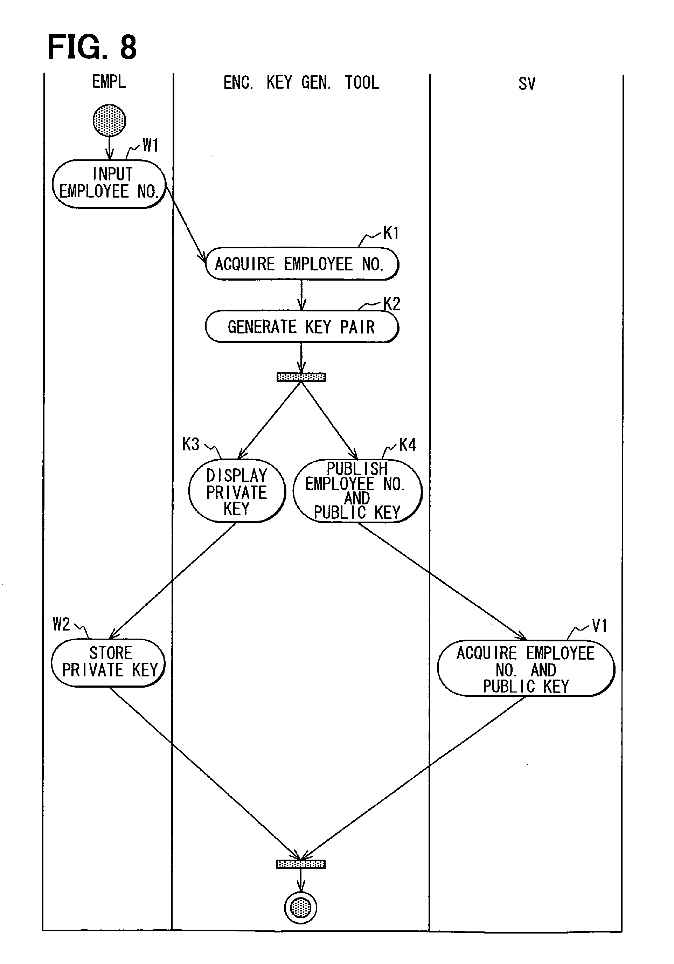

FIG. 8 is a flowchart of encryption key generation performed in the encryption key generation tool 300. The encryption key generation tool 300 and the authentication server 50 are connected to each other via the connectors 20J and 20Q as shown in FIG. 2. With the encryption key generation tool 300 and the authentication server 50 connected to each other, the user (qualified user: employee) inputs his or her employee number to be used as a basic checking code from the input unit 304 of the encryption key generation tool 300 (Step W1). The encryption key generation unit 305 of the encryption key generation tool 300 acquires the inputted employee number (Step K1) and generates a pair of a private key (encryption key) and a public key (decryption key) (Step K2). The private key is outputted to the display unit 302 (Step K3), and the user visually reads and memorizes the private key (Step W2). The public key is sent to the authentication server together with the inputted employee number (Step K4) to be registered and stored in the data storage 53 of the authentication server 50 (Step V1).

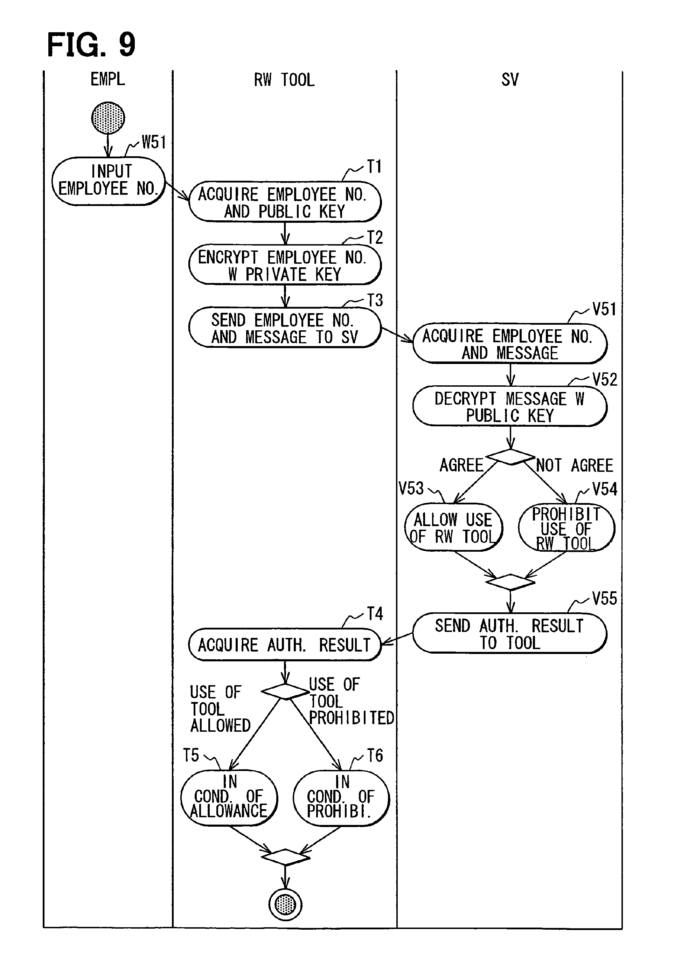

FIG. 9 is a flowchart of a supplemental authentication process performed using the private key and the public key. First, the rewriting tool 10 and the authentication server 50 are connected via the connectors 20T and 20S as shown in FIG. 2. With the rewriting tool 10 and the authentication server 50 connected, the user (qualified user: employee) inputs his or her employee number to be used as a basic checking code and the private key he or she memorized from the input unit 19 of the rewriting tool 10 (Step W51). The rewriting tool 10 acquires the employee number and the private key (Step T1), encrypts, in the encryption unit 22, the employee number using the private key (Step T2), and transmits the unencrypted employee number and an encrypted text generated by encrypting the employee number using the private key to the authentication server 50 (Step T3).

The authentication server 50 receives the (unencrypted) employee number and the encrypted text (Step V51) and searches the data storage 53 for the public key corresponding to the received employee number. The authentication server 50 then decrypts the encrypted text using the public key obtained by searching the data storage 53, and checks the resultant decrypted information against the corresponding employee number (Step V52). When the decrypted information and the employee number match, the supplementary authentication is passed and use of the rewriting tool 10 is permitted (Step V53). When they do not match, the supplementary authentication is not passed, and use of the rewriting tool 10 is prohibited (Step V54). The result of the supplementary authentication is transmitted to the rewriting tool 10 (Step V55). The rewriting tool 10 receives the result of the supplementary authentication (Step T4). When the received authentication result indicates a permission of use, the rewriting tool 10 is set to a condition of allowance in which the rewriting tool 10 is permitted to rewrite vehicle information (Step T5). When the received authentication result indicates a prohibition of use, the rewriting tool 10 is set to a condition of prohibition in which the rewriting tool 10 is prohibited from rewriting vehicle information (Step T6).

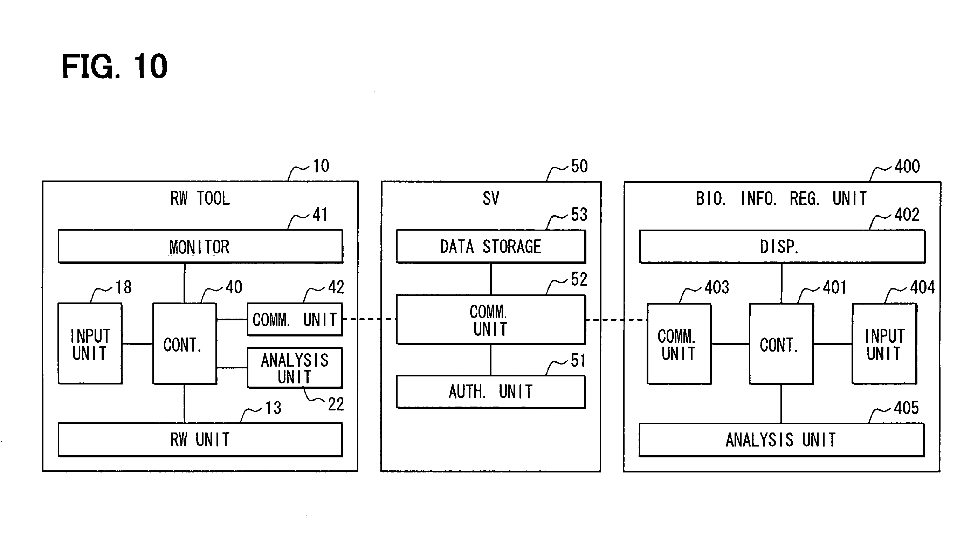

A second example of the supplementary authentication process will be described below. In this example, the supplementary authentication process is performed using a biometric authentication system. FIG. 10 is a block diagram of hardware connections used in this example. Since the hardware connections shown in FIG. 10 are, in many parts, similar to the connections shown in FIG. 7, the following description will center mainly on differences between them. Also, common elements between them will be referred to by same reference numerals, and detailed description of such elements will be omitted below. The input unit of the rewriting tool 10 is configured as a biometric data input unit 18. There are various well-known biometric authentication systems which can be used. In the present embodiment, among voice authentication, retina authentication, face authentication, finger print authentication, and iris authentication systems, any one system or a combination of any two or more systems is used. Depending on the authentication system employed, the corresponding one of a microphone 18A, a retina camera 18B, a face camera 18C, a fingerprint detector 18D, and an iris camera 18E (mentioned in the order corresponding to the selectable authentication systems mentioned above) is used as the biometric data input unit 18.

Regardless of the authentication system employed, the authentication unit 51 of the authentication server 50 does not directly use raw biometric data as it is inputted. When biometric data is inputted by a person to be authenticated, the authentication unit 51 extracts feature data unique to the person from the inputted biometric data, and checks, for authentication, the extracted feature data against the corresponding master feature data registered in advance in the data storage 53. No matter which one of the foregoing authentication systems is employed, a well-known feature data extraction algorithm is used, so that detailed description of such algorithms will be omitted in this specification.

As shown in FIG. 10, a biometric information registration unit 400 is provided to be connectable to the authentication server 50. The biometric information registration unit 400 is for generating and registering master feature data required for each authentication system. As shown in FIG. 2, the authentication server 50 having the connector 20Q and the biometric information registration unit 400 having a connector 20B are connected to be serially communicable via the two connectors. An input unit 404 is a biometric data input unit similar to the one included in the rewriting tool 10.

How the above second example of the supplementary authentication process proceeds will be described below with reference to flowcharts.

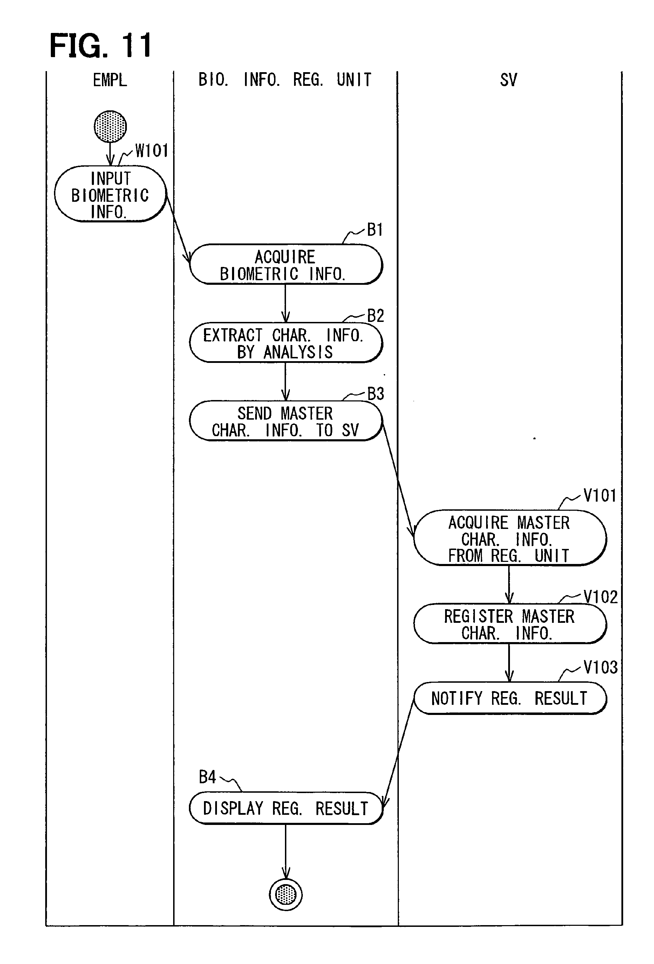

FIG. 11 is a flowchart of master characteristic information generation and registration performed in the biometric information registration unit 400. The biometric information registration unit 400 and the authentication server 50 are connected to each other via the connectors 20B and 20Q as shown in FIG. 2. With the biometric information registration unit 400 and the authentication server 50 connected to each other, the user (qualified user: employee) inputs biometric information on him or her from the input unit 404 of the biometric information registration unit 400 (Step W101). An analysis unit 405 of the biometric information registration unit 400 acquires the inputted biometric information (Step B1), analyzes the biometric information using a well-known algorithm thereby extracting characteristic information from the biometric information (Step B2), and transmits the extracted characteristic information as the master characteristic information to be registered to the authentication server 50 (Step B3). The authentication server 50 receives the master characteristic information (Step V101) and registers and stores it in the data storage 53 (Step V102). When the master characteristic information has been registered, the authentication server 50 sends a registration completion status signal to the biometric information registration unit 400 (Step V103). The result of the master characteristic information registration is displayed in the display unit 402 of the biometric information registration unit 400 (Step B4).

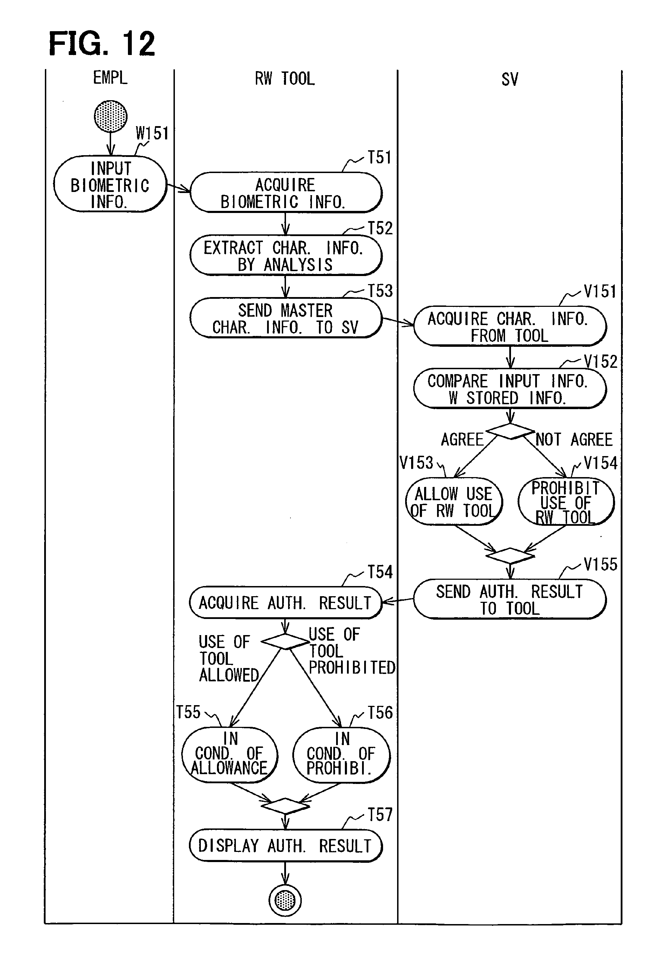

FIG. 12 is a flowchart of a supplemental authentication process performed using biometric data. First, the rewriting tool 10 and the authentication server 50 are connected via the connectors 20T and 20S as shown in FIG. 2. With the rewriting tool 10 and the authentication server 50 connected, the user (qualified user: employee) inputs biometric information on him or her from the biometric data input unit 18 of the rewriting tool 10 (Step W151). The rewriting tool 10 acquires the biometric information (Step T51), analyzes the biometric data using the well-known algorithm thereby extracting feature data from the biometric information (Step T52), and transmits the characteristic information to the authentication server 50 (Step T53).

The authentication server 50 receives the characteristic information (Step V151) and sequentially checks the master characteristic information stored in the data storage 53 to determine whether or not the master feature data matching the received characteristic information is present (Step V152). When the matching master characteristic information is determined to be present, the supplementary authentication is passed and use of the rewriting tool 10 is permitted (Step V153). When the matching master characteristic information is determined to be absent, the supplementary authentication is not passed, and use of the rewriting tool 10 is prohibited (Step V154). The result of the supplementary authentication is transmitted to the rewriting tool 10 (Step V155). The rewriting tool 10 receives the result of the supplementary authentication (Step T54). When the received authentication result indicates a permission of use, the rewriting tool 10 is set to a condition of allowance in which the rewriting tool 10 is permitted to rewrite vehicle information (Step T55). When the received authentication result indicates a prohibition of use, the rewriting tool 10 is set to a condition of prohibition in which the rewriting tool 10 is prohibited from rewriting vehicle information (Step T56). In Step T57, the result of the supplementary authentication process performed using the biometric information is displayed in the monitor 41.

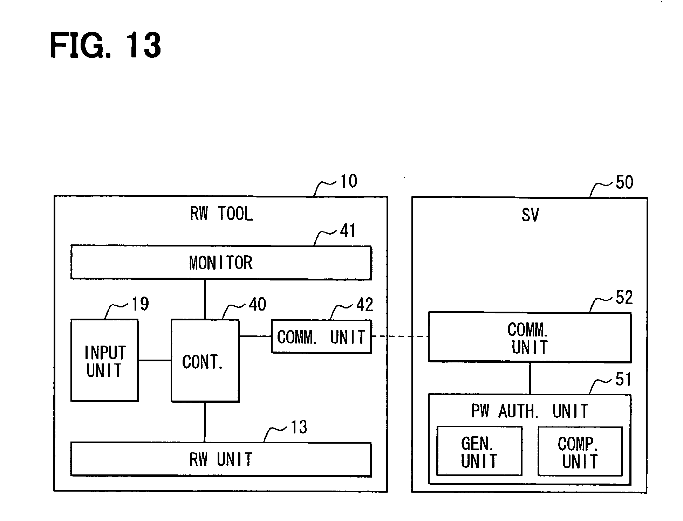

A third example of the supplementary authentication process will be described below. In this example, the supplementary authentication process is performed using a one-time password system. FIG. 13 is a block diagram of hardware connections used in the this example. Since the hardware connections shown in FIG. 13 are, in many parts, similar to the connections shown in FIG. 7, the following description will center mainly on differences between them. Also, common elements between them will be referred to by same reference numerals, and detailed description of such elements will be omitted below. The keyboard 19 is used as the input unit of the rewriting tool 10. No special tools are used for generation and registration of authentication information. In the present example, the authentication unit 51 of the authentication server 50 functions both as a one-time password generation unit and as a one-time password checking unit.

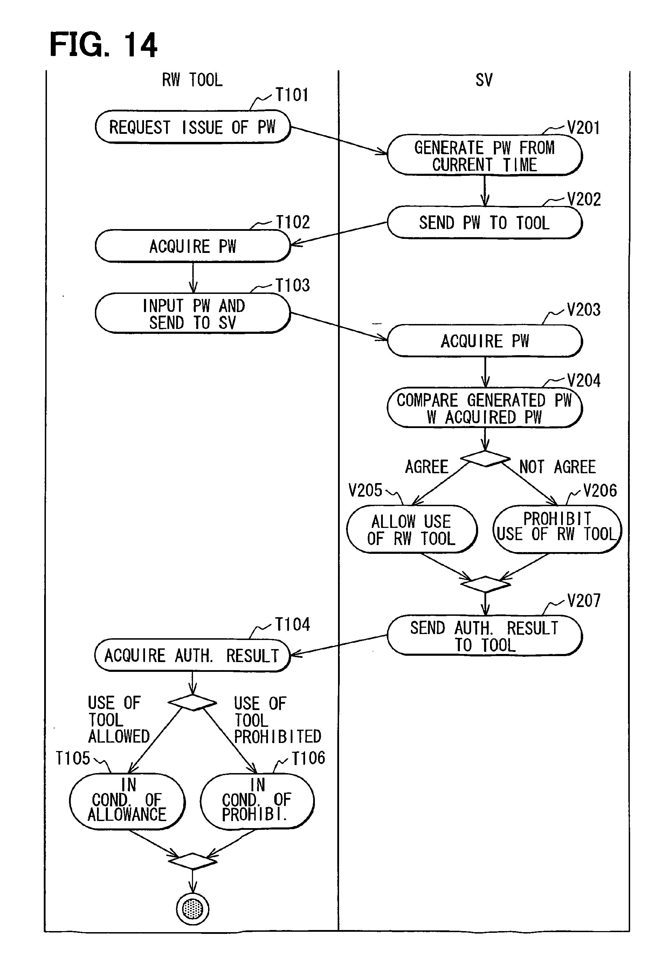

How the above second example of the supplementary authentication process proceeds will be described below with reference to the flowchart shown in FIG. 14. The rewriting tool 10 and the authentication server 50 are connected to each other via the connectors 20T and 20S as shown in FIG. 2. With the rewriting tool 10 and the authentication server 50 connected to each other, the user (qualified user: employee) inputs a command requesting issuance of a password from the input unit 19 of the rewriting tool 10 (Step T101). The authentication server 50 receives the command (Step V201), issues a one-time password, and transmits it to the rewriting tool 10 (Step V202).

The algorithm for one-time password generation is well-known, so that a typical token-based authentication system will be only briefly described below. In a token-based authentication system, each user is given a token, that is, in the present example, a software token which operates on the microcomputer 40 of the rewriting tool 10. The token stores a unique numeric value (seed) and has a built-in software clock. Using time data given by the software clock and the seed value, a token code which is associated with the particular token and which is valid only at a particular time is generated. The token code thus generated is displayed on the token only during a constant update interval (for example, 60 seconds) determined for the token. The token code is updated every update interval. This authentication system is called a time synchronous authentication system.

Besides the time synchronous authentication system described above, a counter synchronous authentication system can also be used for token-based authentication. The token used in the counter synchronous authentication system has an internal counter instead of a clock. The counter is used to synchronize the authentication server 50 and the token used in the rewriting tool 10 based on the number of times of password issuances. When a user executes a password generation command, a one-time password is generated based on the count of the internal counter. The count of the internal counter is updated every time a one-time password is generated. In this system, no time data is used, so that the authentication server 50 and the token used in the rewriting tool 10 do not easily get out of synchronization.

The rewriting tool 10 acquires the issued password (Step T102) and displays it in the monitor 41. The password can be validly inputted only during the current update interval, so that the user inputs the displayed password promptly from the input unit 19 before the current update interval ends. The password thus inputted is transmitted to the authentication server 50 (Step T103).

The authentication server 50 receives the password (Step V203) and checks to see if the received password matches the password reserved in the authentication server 50 (Step V204). When the received password is the one inputted after the valid update interval elapsed, it does not match the password reserved in the authentication server 50 as the reserved password is already updated (needless to say, the two passwords do not match also when the received password contains an input error). When the two passwords match, the supplementary authentication is passed and use of the rewriting tool 10 is permitted (Step V205). When the two passwords do not match, the supplementary authentication is not passed, and use of the rewriting tool 10 is prohibited (Step V206). The result of the supplementary authentication is transmitted to the rewriting tool 10 (Step V207). The rewriting tool 10 receives the result of the supplementary authentication (Step T104). When the received authentication result indicates a permission of use, the rewriting tool 10 is set to a condition of allowance in which the rewriting tool 10 is permitted to rewrite vehicle information (Step T105). When the received authentication result indicates a prohibition of use, the rewriting tool 10 is set to a condition of prohibition in which the rewriting tool 10 is prohibited from rewriting vehicle information (Step T106).

## Claims

1. A vehicle information rewriting system having a vehicle control unit (ECU1) and a rewriting tool (10), wherein the vehicle control unit (ECU1) has a main controller with a CPU (101) for performing a control process of vehicular electric devices based on an execution of a predetermined software program under control of the main controller, wherein the rewriting tool (10) is removably connected to the vehicle control unit (ECU1) through a communication unit (20T) as a data sender, and wherein the rewriting tool (10) rewrites a memory content of a vehicle information storage (12) that is implemented by using a nonvolatile memory for storing vehicle information including the software program based on a rewriting data sent from the rewriting tool (10) through the communication unit (20T),
the rewriting tool (10) comprising:
an operation mode switching unit (11) which makes switching between a rewriting permitted mode in which rewriting of data stored in the vehicle information storage (12) is permitted and a rewriting restricted mode in which rewriting of data stored in the vehicle information storage (12) is restricted relative to the rewriting permitted mode;
a wireless polling unit (42) which, when the rewriting tool (10) is used for rewriting operation, wirelessly polls a wireless authentication medium (200) for detecting the wireless authentication medium (200) mandatorily in possession of an authorized user of the rewriting tool (10); and
a mode switch ordering unit (11) which orders the operation mode switching unit (11) to switch to the rewriting permitted mode on condition of a successful detection of the wireless authentication medium (200) through the wireless polling.

2. The vehicle information rewriting system of claim 1,
wherein the wireless polling unit (42) repeatedly performs wireless polling of the wireless authentication medium (200) at a regular interval, and
when the operation mode switching unit (11) is in a state of setting the rewriting permitted mode, the mode switch ordering unit (11) instructs the operation mode switching unit (11) to switch from the rewriting permitted mode to the rewriting restricted mode on condition that a series of detection results of the wireless authentication medium (200) in a repeated manner through the wireless polling turns from being successful to being unsuccessful.

3. The vehicle information rewriting system of claim 1,
wherein the mode switch ordering unit (11) immediately instructs the operation mode switching unit (11) to switch from the rewriting restricted mode to the rewriting permitted mode on condition that a series of detection results of the wireless authentication medium (200) in a repeated manner through the wireless polling turns from being unsuccessful to being successful when the operation mode switching unit (11) is in a state of setting the rewriting restricted mode.

4. The vehicle information rewriting system of claim 2 or 3,
wherein the mode switch ordering unit (11) instructs the operation mode switching unit (11) to switch from the rewriting permitted mode to the rewriting restricted mode on condition that a series of detection results of the wireless authentication medium (200) in a repeated manner through the wireless polling turns from being successful to being unsuccessful with at least plural times of unsuccessful detection results when the operation mode switching unit (11) is in a state of setting the rewriting permitted mode.

5. The vehicle information rewriting system of any one of claims 1 to 4,
wherein the wireless authentication medium (200) serves as a portable unit having a unique ID code of each vehicle in a smart key system for performing a predetermined control based on a comparison result of the unique ID code with a wireless communication between the portable unit and a vehicle unit for identifying the portable unit to be within a predetermined distance range from a vehicle (C) in association with the unique ID code, and
the unique ID code stored in the portable unit is used as an authorized user authentication information that authenticates the authorized user of the rewriting tool (10).

6. The vehicle information rewriting system of claim 5,
wherein the portable unit is in association with the vehicle (C) whose vehicle information is subject to rewriting, and
the rewriting tool (10) has a registration unit (11) that is used to register the portable unit of the vehicle (C) as the wireless authentication medium (200) of the authorized user of the rewriting tool (10).

7. The vehicle information rewriting system of any one of claims 1 to 6,
wherein the rewriting tool (10) has a supplemental authentication information input unit (18, 19) for supplementally authenticating the authorized user of the rewriting tool (10) besides the authentication of the authorized user by detecting the wireless authentication medium (200) and an authentication result acquisition unit (17) for acquiring an authentication result of a supplemental authentication process based on an inputted supplemental authentication information, and
the mode switch ordering unit (11) instructs the operation mode switching unit (11) to switch to the rewriting permitted mode with a prerequisite that the wireless authentication medium (200) is successfully detected through the wireless polling and that the supplemental authentication process yields an accepted authentication.

8. The vehicle information rewriting system of claim 7,
wherein the rewriting tool (10) is connectable to an authentication server (50), and
the authentication server (50) has a supplemental authentication information reception unit (20S) for receiving the supplemental authentication information from the rewriting tool (10), a supplemental authentication execution unit (51) for executing the supplemental authentication process and an authentication result transmission unit (52) for transmitting an authentication result of the supplemental authentication process.

9. The vehicle information rewriting system of claim 8,
wherein the rewriting tool (10) has a basic check code input unit (19) for inputting a basic check code as the supplemental authentication information, an encryption key acquisition unit (19) for acquiring an encryption key that encrypts the basic check code, an encrypted check code generation unit (22) for generating an encrypted check code by encrypting an inputted basic check code with the encryption key, and an encrypted check code transmission unit (17) for transmitting the encrypted check code to the authentication server (50),
the basic check code serves as the supplemental authentication information,
the supplemental authentication execution unit (51) in the authentication server (50) has a decryption key acquisition unit (52) for acquiring a decryption key that is paired with the encryption key and a check code decryption unit for decrypting the encrypted check code transmitted from the rewriting tool (10) by using the acquired decryption key, and
the supplemental authentication execution unit (51) executes the supplemental authentication process based on the decrypted check code.

10. The vehicle information rewriting system of claim 9,
wherein the encrypted check code transmission unit (17) in the rewriting tool (10) transmits the basic check code without encryption together with the encrypted check code, and
the supplemental authentication execution unit (51) in the authentication server (50) executes the supplemental authentication process based on both of the check code that is decrypted from the encrypted check code and the basic check code without encryption that is transmitted together with the encrypted check code.

11. The vehicle information rewriting system of claim 10,
wherein an encryption key generation tool (300) is disposed to be connectable to the authentication server (50),
the encryption key generation tool (300) has an encryption/decryption key generation unit (305) for generating an encryption key that corresponds to the basic check code and a decryption key that corresponds to the encryption key in a paired manner, an encryption key output unit (303) for publishing and outputting the generated encryption key only to the authorized user of the rewriting tool (10) and a decryption key transmission unit (303) for transmitting the generated decryption key in association with the basic check code to the authentication server (50),
the decryption key acquisition unit (52) in the authentication server (50) has a reception unit for receiving the decryption key to be transmitted and the basic check code and a memory unit for memorizing the received decryption key in association with the basic check code,
the supplemental authentication execution unit (51) in the authentication server (50) retrieves the decryption key that corresponds to the received basic check code from the memory unit for an attempt of a decryption of the received encrypted check code, and
the supplemental authentication execution unit (51) in the authentication server (50) executes the supplemental authentication process based on a condition whether decrypted information in the attempt of the decryption matches with the basic check code.

12. The vehicle information rewriting system of claim 7 or 8,
wherein the supplemental authentication information input unit (18, 19) is a biometric authentication information input unit (18) for inputting a biometric authentication information of the authorized user as the supplemental authentication information.

13. The vehicle information rewriting system of claim 12,
wherein all limitations in claim 8 are incorporated herein,
the rewriting tool (10) has a biometric information extraction unit (40) for extracting a biometric characteristic information from the inputted biometric authentication information and a biometric characteristic information transmission unit (42) for transmitting the extracted biometric characteristic information to the authentication server (50),
the supplemental authentication execution unit (51) in the authentication server (50) has a reception unit for receiving the biometric characteristic information, and
the supplemental authentication execution unit (51) in the authentication server (50) executes the supplemental authentication process based on the received biometric characteristic information.

14. The vehicle information rewriting system of claim 8,
wherein the rewriting tool (10) has a password issuance request unit (40) for requesting an issuance of a password to the authentication server (50),
the authentication server (50) has a password issuance unit (51) for issuing the password upon receiving a request of the issuance of the password and transmitting the password to the rewriting tool (10),
the rewriting tool (10) has a password output unit (42) for publishing and outputting the issued password to the authorized user of the rewriting tool (10), a password input unit (19) for the authorized user to input the published password for authentication and a password transmission unit (42) for transmitting the inputted password to the authentication server (50),
the supplemental authentication execution unit (51) has a reception unit for receiving the password, and
the supplemental authentication execution unit (51) executes the supplemental authentication process based on the received password.
